# FASCICULE DE BREVET EUROPEEN

(11) **EP 3 333 051 B1**
(45) Date de publication et mention de la délivrance du brevet: **11.09.2019**
(21) Numéro de dépôt: 17202524.9
(22) Date de dépôt: 20.11.2017
(51) Int. Cl.: B62D 25/14

(54) **FIXATION SIMPLIFIÉE D'UN JAMBAGE DE TRAVERSE DE POSTE DE CONDUITE DE VÉHICULE**
VEREINFACHTE DIREKTE BEFESTIGUNG EINES QUERTRÄGERS EINER FAHRERKABINE EINES KRAFTFAHRZEUGS
SIMPLIFIED ATTACHMENT OF A CROSS-MEMBER OF A DRIVER'S COMPARTMENT OF A VEHICLE

(30) Priorité: 09.12.2016 FR 1662193
(43) Date de publication de la demande: 13.06.2018
(73) Titulaire: RENAULT s.a.s., 92100 Boulogne-Billancourt (FR)
(72) Inventeur: FLANDIN, MICHAEL, 28410 BROUE (FR); DEMEULES, REMI, 78200 MANTES LA JOLIE (FR)

(56) Documents cités:
- EP-A2- 2 436 579
- FR-A1- 2 919 261
- FR-A3- 3 000 007
- JP-A- H04 252 779

## Description

La présente invention concerne une traverse de poste de conduite d'un véhicule, dite aussi traverse de planche de bord, et comportant un élément métallique principal transversal, ou barre horizontale, et un jambage central destiné à se fixer sur le tunnel central du plancher du véhicule. Notamment, l'invention se rapporte à une fixation simplifiée d'un tel jambage.

Il y a de très nombreuses formes connues de traverses de poste de conduite. Le document FR 2 891 799 montre une telle traverse dans laquelle la barre horizontale est formée de deux tronçons de tubes métalliques de diamètre différent et la jambe de maintien est un profilé métallique.

Selon le document US 6 523 878, le jambage central est réalisé sous forme de deux jambes venant se fixer de part et d'autre du tunnel central, reliées par une barre horizontale, destinée à supporter les équipements de climatisation. Les éléments constituant le jambage central sont des profilés métalliques fixés, par exemple par soudage, à la barre horizontale transversale.

L'ensemble de la traverse avec ses deux éléments métalliques est relativement lourd et dans le cadre de l'allégement souhaité des véhicules, il serait souhaitable de trouver un moyen de rendre la traverse de poste de conduite plus légère sans diminuer sa résistance ni compliquer son implantation dans le véhicule.

Le document EP 2 233 385 A1 décrit ainsi une traverse hybride comportant une barre horizontale métallique sur laquelle les éléments constituants le jambage et d'autres éléments sont en matériau polymère surmoulé.

Le document FR 3 000 007 A1 décrit une traverse comportant une barre horizontale métallique à laquelle sont fixés les éléments constituants le jambage, ces derniers étant réalisés d'une pièce en matériau polymère moulé.

Il existe néanmoins toujours un besoin pour alléger la traverse et améliorer et simplifier la liaison entre le jambage et la barre horizontale métallique.

L'invention atteint cet objectif en proposant une traverse de poste de conduite d'un véhicule, comportant un élément métallique principal transversal et un jambage central destiné à être fixé au plancher du véhicule, le jambage étant une pièce unitaire comprenant deux jambes sensiblement perpendiculaires à une direction longitudinale de l'élément métallique principal transversal et au moins une barre de liaison entre les deux jambes, des moyens de fixation supérieurs et inférieurs étant prévus en haut et en bas du jambage pour le fixer respectivement à l'élément métallique principal et au plancher.

Selon l'invention, les moyens de fixation supérieurs comprennent, pour chaque jambe :
- deux pattes de fixation planes solidaires de l'élément métallique principal transversal et parallèles à une direction longitudinale de celui-ci,
- une interface de fixation faisant partie d'une jambe et définissant :
   - une surface d'appui concave appliquée directement contre une partie de la paroi de l'élément métallique principal transversal et en épousant le contour,
   - deux surfaces d'appui planes situées de part et d'autre de la surface d'appui concave par rapport à l'élément métallique principal transversal, chaque surface d'appui plane étant solidarisée à une patte de fixation de l'élément métallique principal transversal.

Un tel agencement permet de réaliser une liaison simple et néanmoins robuste entre l'élément métallique principal transversal et le jambage, avec un nombre limité de pièces. Les pattes de fixation planes solidaires de l'élément métallique principal transversal peuvent être des pattes métalliques, par exemple solidarisées par soudure. Elles peuvent en outre présenter une ou plusieurs parois de rigidification s'étendant perpendiculairement à leur plan et en saillie de leur face opposée à la face recevant une surface d'appui d'une interface de fixation.

Avantageusement, les pattes de fixation planes peuvent s'étendre dans un même plan, ce qui peut faciliter l'assemblage d'une interface d'utilisation.

Ce plan peut être un plan sensiblement horizontal dans une position d'utilisation de la traverse dans laquelle l'élément métallique principal transversal s'étend sensiblement horizontalement, pour une position ergonomique améliorée au montage. En variante ou en combinaison, il peut s'agir d'un plan contenant un axe de symétrie longitudinal de l'élément métallique principal transversal, pour une meilleure répartition des contraintes exercées sur chaque interface de fixation.

La traverse selon l'invention peut en outre présenter une ou plusieurs des caractéristiques suivantes :
- l'élément métallique principal transversal peut présenter une section transversale (dans un plan perpendiculaire à sa direction longitudinale) circulaire, ce qui permet de simplifier sa réalisation.
- L'interface de fixation peut comprendre au moins un élément d'indexation mâle/femelle coopérant avec un élément d'indexation correspondant de l'élément métallique principal transversal, notamment pour un bon positionnement relatif des deux pièces. Avantageusement, au moins un élément d'indexation mâle/femelle peut être ménagé sur une surface d'appui plane d'une interface de fixation.
- L'interface de fixation peut être solidarisée à l'élément métallique principal transversal par des vis ou des rivets, notamment suivant une unique direction de fixation.
- Le jambage peut comprendre des zones de fixation destinées à recevoir en fixation au moins un élément fonctionnel, par exemple un groupe de gestion de la température de l'habitacle. Ces zones de fixation peuvent notamment être agencées pour permettre une fixation suivant une direction sensiblement horizontale dans la position d'utilisation de la traverse. De telles zones de fixation peuvent comprendre des surfaces planes percées pour la réception de vis ou rivets.

De manière générale, le jambage est réalisé d'une pièce, de préférence en matériau moulé. Ce matériau peut être choisi parmi un polymère et du magnésium et tout autre alliage métallique léger présentant une résistance suffisante. Le jambage peut également être fait de ces deux matériaux (conception hybride), le matériau polymère pouvant par exemple être surmoulé sur le magnésium ou un alliage métallique léger.

D'autres caractéristiques et avantages de l'invention ressortiront de la description suivante d'un exemple de réalisation. Il sera fait référence aux dessins annexés, non limitatifs, sur lesquels :
- la figure 1 est une vue en perspective d'une traverse de planche de bord selon l'invention, avec son jambage central ;
- la figure 2 est une vue en perspective d'une fixation supérieure du jambage central de la figure 1 ;
- la figure 3 est une vue en perspective de la partie supérieure d'une jambe du jambage central ;
- la figure 4 est une vue de côté d'une fixation supérieure du jambage central à la traverse de la figure 1 ;
- la figure 5 est une vue en perspective de la traverse de la figure 1 sur laquelle est monté un groupe de gestion de la climatisation, avec deux vues de détail des fixations du jambage central au groupe de gestion.

Dans la présente description, les termes avant, arrière, supérieur, inférieur, font référence aux directions avant et arrière du véhicule, lorsque la traverse est montée sur le véhicule. Les axes X, Y, Z, correspondent respectivement à l'axe longitudinal (d'avant en arrière), transversal et vertical du véhicule.

Par sensiblement horizontal, longitudinal ou vertical, on entend une direction formant un angle d'au plus ±20°, voire d'au plus 10° ou d'au plus 5° avec une direction horizontale, longitudinale ou verticale.

Par sensiblement parallèle, perpendiculaire, on entend une direction/un angle s'écartant d'au plus ±20°, voire d'au plus 10° ou d'au plus 5° d'une direction parallèle, perpendiculaire.

La traverse 1 représentée comprend un élément métallique tubulaire transversal 2 (ou barre transversale) et un jambage central 3 constitué d'une pièce unitaire, par exemple en plastique moulé. La pièce peut notamment être réalisée en résine mêlée de charges, par exemple sous forme particulaire ou de préférence sous forme de fibres. Elle peut également être en magnésium ou en plastique et magnésium.

De manière connue en soi, l'élément métallique tubulaire transversal 2 est destiné à supporter divers accessoires, tel que par exemple un support de la colonne de direction. Il est constitué ici de deux tronçons tubulaires 2a, 2b de section différente, ici circulaire. L'invention n'est toutefois pas limitée à ce mode de réalisation, un unique tronçon pourrait être prévu et/ou une autre forme de section pourrait être envisagée.

L'élément métallique tubulaire transversal 2 présente une direction longitudinale 4, laquelle s'étend sensiblement horizontalement dans la position de montage (d'utilisation) de la traverse 1.

Le jambage 3 comporte des jambes 5 sensiblement perpendiculaires à la direction longitudinale 4, ici sensiblement verticales et symétriques, et deux barres de liaison respectivement à mi-hauteur 6 et en position haute 7. La section basse des jambes 5 est ici sensiblement verticale, tandis que sa section supérieure s'évase un peu vers l'extérieur (direction Y et direction opposée à Y) et vers l'avant du véhicule (direction opposée à X).

La structure des jambes 5 et des barres de liaison 6, 7 du jambage 3 peut être tel que décrit dans le document FR 3 000 007 A1. Les jambes 5 peuvent ainsi être formées de plusieurs sections de profilés nervurés, formant un canal ouvert vers l'extérieur et défini par un fond 5a et des ailes 5b (ou nervures). Les barres de liaison 6, 7 peuvent également être en forme de canal à fond et ailes, ouvert vers l'avant du véhicule, et renforcé éventuellement par des voiles obliques s'étendant d'une aile à l'autre perpendiculairement au fond à l'intérieur du canal. La forme exacte de ces barres peut toutefois être déterminée par les éléments qui doivent être portés par ces barres, comme par exemple une commande de boîte de vitesse. Des vis peuvent être prévues à l'arrière du jambage pour permettre la fixation de ces divers éléments ou accessoires.

Des moyens de fixation supérieurs et inférieurs sont également prévus en haut et en bas du jambage 3 pour le fixer respectivement à l'élément métallique principal 2 et au plancher du véhicule (non représenté). Le haut des sections hautes des jambes 5 est ainsi pourvu de moyens de fixation supérieurs 8. Le bas des sections basses des jambes 5 est pourvu de moyens de fixation inférieurs 25, 26.

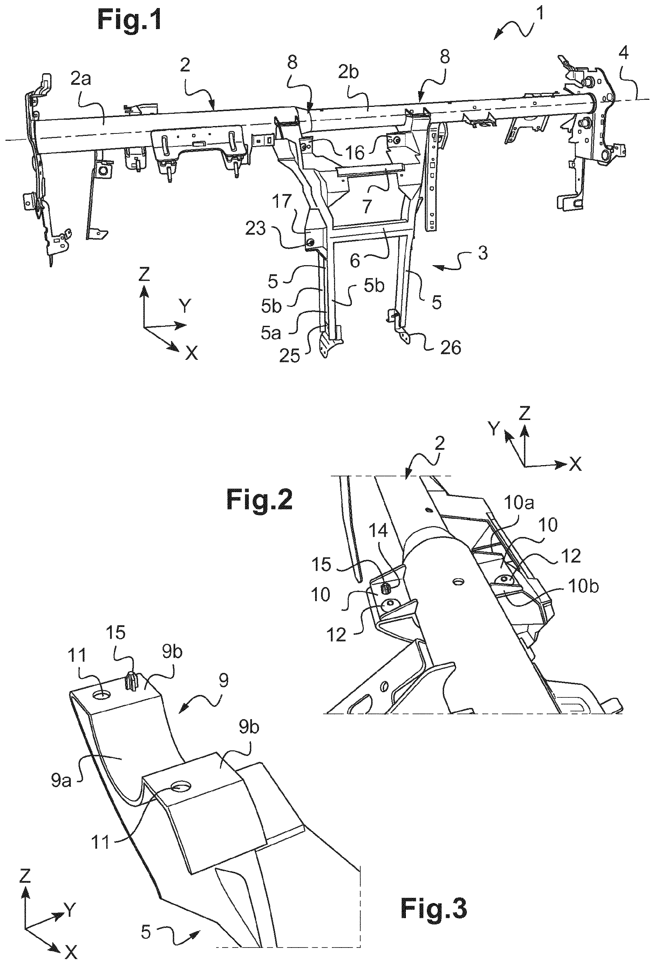

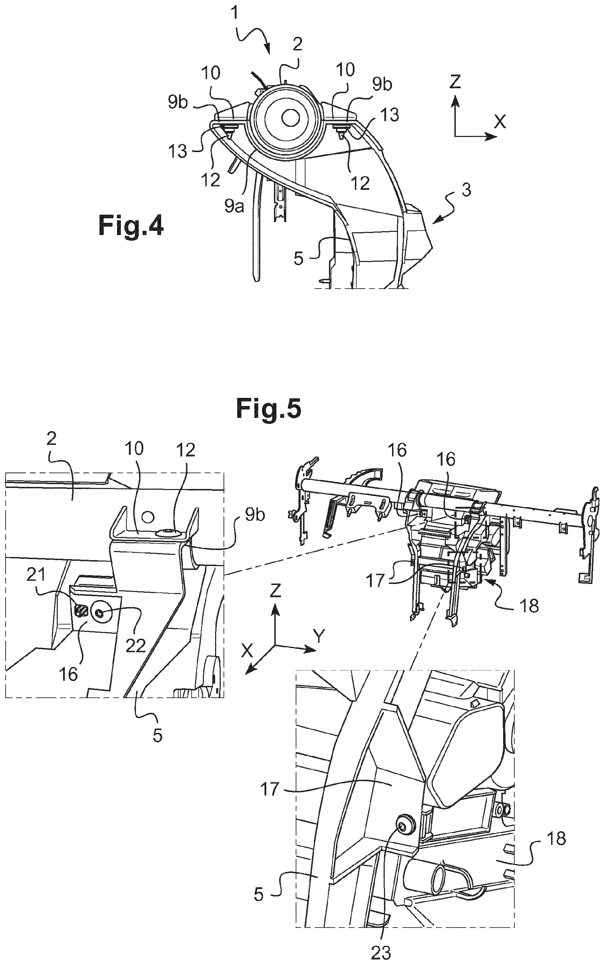

Les moyens de fixation supérieurs 8 comprennent, pour chaque jambe 5, une interface de fixation 9 faisant partie d'une jambe et solidarisée à l'élément métallique principal transversal 2. Cette interface de fixation définit une surface d'appui concave 9a appliquée directement (sans pièce intermédiaire) contre une partie de la paroi de l'élément métallique principal transversal 2 en épousant le contour de celui-ci, tel que visible sur les figures 3 et 4. Autrement dit, la surface d'appui concave 9a et l'élément métallique principal transversal 2 présentent des formes complémentaires.

L'interface de liaison 9 de chaque jambe 5 comprend en outre deux surfaces d'appui planes 9b situées de part et d'autre de la surface d'appui concave 9a par rapport à l'élément métallique principal transversal 2, tel que visible plus clairement sur les figures 3 et 4. Les deux surfaces d'appui planes 9b servent à la fixation de l'interface de liaison 9 à l'élément métallique principal 2. L'interface de liaison 9 présente ainsi une forme similaire à un demi-collier de fixation, tel que visible figure 3.

Ces surfaces d'appui planes 9b sont solidarisées à des pattes de fixation 10, elles-mêmes solidaires de l'élément métallique principal 2. Ces pattes de fixation 10 sont de préférence métalliques et fixées par soudure à l'élément métallique principal 2. Elles sont parallèles à la direction longitudinale 4 de l'élément métallique principal 2.

Dans l'exemple représenté, on notera que ces pattes de fixation 10 sont bordées de deux ailes 10a, 10b perpendiculaires, en saillie de la face opposée à la face recevant la surface d'appui plane 9b. Cette configuration permet de réaliser une patte de fixation 10 robuste, plus facile à fixer, sans augmentation importante de poids.

En outre, les pattes de fixation 10 s'étendent ici dans un même plan (voir figure 4). Dans cet exemple, il s'agit d'un plan sensiblement horizontal dans la position d'utilisation de la traverse 1 dans laquelle l'élément métallique principal transversal 2 s'étend sensiblement horizontalement. En outre, ce plan contient l'axe de symétrie longitudinal de l'élément métallique principal transversal 2. Autrement dit, la surface d'appui concave 9a s'étend ici sur une moitié inférieure de la périphérie de l'élément métallique principal transversal 2. Ceci permet de faciliter la fixation de l'interface de fixation 9, cette fixation pouvant être réalisée suivant une seule direction sensiblement verticale. En outre, ceci peut favoriser le maintien de l'élément métallique principal transversal 2 lors de son montage sur le jambage 3 : il repose en effet sur, et est maintenu dans, la surface concave de chaque interface de liaison 9.

L'invention n'est toutefois pas limitée à ce mode de réalisation particulier et les pattes de fixation pourraient ne pas s'étendre dans un même plan ou ce plan pourrait ne pas contenir l'axe de symétrie de l'élément métallique principal transversal 2. Notamment, la surface d'appui 9a peut s'étendre au moins sur un quart de la périphérie de l'élément métallique principal 2.

L'interface de fixation 9 est fixée à l'élément métallique principal 2 par des vis ou des rivets, tel que décrit ci-après en référence aux figures 2 à 4. A cet effet, chaque surface d'appui plane 9b est percée d'un orifice 11, les pattes de fixation 10 étant percées d'orifices correspondant pour le passage de rivets ou vis 12. Notamment, l'interface de fixation 9 peut comprendre des écrous sertis 13 pour la fixation de vis 12 (fig. 4).

L'interface de fixation 9 est en outre pourvue d'un élément d'indexation mâle/femelle 15 coopérant avec un élément d'indexation correspondant de l'élément métallique principal transversal 2. Cet élément d'indexation 15 est ici un doigt en saillie qui coopère avec un orifice 14 de la patte de fixation plane 10 (figure 2). Cet élément d'indexation 15, ménagé ici sur une surface d'appui plane 9b, participe au prémaintien du jambage 3 et de l'élément métallique principal transversal 2.

Bien entendu, le doigt 15 pourrait faire partie de la patte de fixation plane 10, il est toutefois plus simple de le réaliser sur le jambage 3 par moulage. L'invention n'est pas limitée non plus par un nombre particulier de ces éléments d'indexation, ni par leur position.

Le jambage 3 comprend également des zones de fixation destinées à recevoir en fixation un élément fonctionnel 18, par exemple ici un groupe HVAC (acronyme de l'anglais « heating, ventilation and air-conditioning »), autrement dit un groupe de gestion du chauffage, de la ventilation et de la climatisation.

Dans l'exemple représenté, quatre zones de fixation 16, 17 sont prévues, deux zones de fixation haute 16 et deux zones de fixation basse 17. Ces zones de fixation 16, 17 sont agencées de manière à permettre une fixation de l'élément fonctionnel 18 suivant une unique direction de fixation, correspondant ici sensiblement à l'axe longitudinal X du véhicule.

Tel que visible sur la figure 1 et sur les détails de la figure 5, chaque zone de fixation haute 16 est formée d'une paroi plane percée de deux orifices recevant respectivement un pion de centrage 21 solidaire de l'élément fonctionnel 18 et une vis 22. La zone de fixation 16 est ici située sensiblement à proximité de la surface d'appui plane 9b.

Les zones de fixation basse 17 sont chacune formées d'une paroi plane percée d'un orifice pour le passage d'une vis 23.

Bien entendu, l'invention n'est pas limitée par la forme, le nombre et la nature des zones de fixation, pourvu qu'elles permettent d'assurer une fixation de l'élément fonctionnel 18 au jambage 3. A noter que le jambage 3 pourrait présenter des zones de fixation pour la fixation de plusieurs éléments fonctionnels.

Les moyens de fixation inférieurs du jambage 3 comprennent ici des trous 25 à l'extrémité inférieure de chaque jambe 5 pour le vissage sur des pièces de liaison 26 métalliques elles-mêmes fixées de part et d'autre du tunnel central du plancher du véhicule (non représenté). Ces trous 25 peuvent comprendre des écrous sertis pour faciliter la fixation des pattes. En variante, le bas des sections basses des jambes pourraient être directement fixées de part et d'autre du tunnel central.

L'interface de fixation 9 forme ainsi l'extrémité supérieure d'une jambe 5. On notera que les doigts 15 peuvent être réalisés par moulage sans mouvement particulier de l'outil.

L'invention permet de réaliser une interface jambage / élément métallique principal transversal offrant une bonne tenue mécanique. Le montage des différentes pièces est en outre simple et, dans l'exemple décrit, toutes les fixations sont accessibles pour l'opérateur en restant du même côté de la traverse poste de conduite.

## Revendications

1. Traverse (1) de poste de conduite d'un véhicule, comportant un élément métallique principal transversal (2) et un jambage central (3) destiné à être fixé au plancher du véhicule, le jambage (3) étant une pièce unitaire comprenant deux jambes (5) sensiblement perpendiculaires à une direction longitudinale de l'élément métallique principal transversal (2) et au moins une barre de liaison (6, 7) entre les deux jambes (5), des moyens de fixation supérieurs et inférieurs étant prévus en haut et en bas du jambage (3) pour le fixer respectivement à l'élément métallique principal (2) et au plancher, **caractérisée en ce que** les moyens de fixation supérieurs (8) comprennent, pour chaque jambe :
- deux pattes de fixation planes (10) solidaires de l'élément métallique principal transversal (2) et parallèles à une direction longitudinale de celui-ci,
- une interface de fixation (9) faisant partie d'une jambe (5) et définissant :
- une surface d'appui concave (9a) appliquée directement contre une partie de la paroi de l'élément métallique principal transversal (2) et en épousant le contour,
- deux surfaces d'appui planes (9b) situées de part et d'autre de la surface d'appui concave (9a) par rapport à l'élément métallique principal transversal (2), chaque surface d'appui plane (9b) étant solidarisée à une patte de fixation (10) de l'élément métallique principal transversal (2).

2. Traverse (1) selon la revendication 1, **caractérisée en ce que** lesdites pattes de fixation planes (10) s'étendent dans un même plan, par exemple un plan sensiblement horizontal dans une position d'utilisation de la traverse dans laquelle l'élément métallique principal transversal (2) s'étend sensiblement horizontalement.

3. Traverse (1) selon la revendication 1 ou 2, **caractérisée en ce que** lesdites pattes de fixation planes (10) s'étendent dans un même plan contenant un axe de symétrie longitudinal de l'élément métallique principal transversal (2).

4. Traverse (1) selon l'une quelconque des revendications 1 à 3, **caractérisée en ce que** l'élément métallique principal transversal (2) présente une section transversale circulaire.

5. Traverse (1) selon l'une quelconque des revendications 1 à 4, **caractérisée en ce que** l'interface de fixation (9) comprend au moins un élément d'indexation mâle/femelle (15) coopérant avec un élément d'indexation (14) correspondant de l'élément métallique principal transversal (2).

6. Traverse (1) selon la revendication 5, **caractérisée en ce qu'**au moins un élément d'indexation mâle/femelle (15) est ménagé sur une surface d'appui plane (9b) d'une interface de fixation.

7. Traverse (1) selon l'une quelconque des revendications 1 à 6, **caractérisée en ce que** les surfaces d'appui planes (9b) d'une interface de fixation (9) sont solidarisées aux pattes de fixation (10) de l'élément métallique principal transversal (2) par des vis ou des rivets (13).

8. Traverse (1) selon l'une quelconque des revendications 1 à 7, **caractérisée en ce que** le jambage (3) comprend des zones de fixation (16, 17) destinées à recevoir en fixation au moins un élément fonctionnel (18).

9. Traverse (1) selon l'une quelconque des revendications 1 à 8, **caractérisée en ce que** le jambage (3) est en un matériau moulé choisi parmi un polymère, du magnésium et leur association.

## Patentansprüche

1. Querträger (1) einer Fahrerkabine eines Kraftfahrzeugs, umfassend ein quer verlaufendes metallenes Hauptelement (2) und eine mittige Abstützung (3), die dazu bestimmt ist, am Boden des Fahrzeugs befestigt zu werden, wobei die Abstützung (3) ein einziges Teil ist, das zwei Streben (5), die im Wesentlichen senkrecht zu einer Längsrichtung des quer verlaufenden metallenen Hauptelements (2) verlaufen, und mindestens eine Verbindungsstange (6, 7) zwischen den beiden Streben (5) umfasst, wobei obere und untere Befestigungsmittel oben und unten an der Abstützung (3) vorgesehen sind, um sie jeweils am metallenen Hauptelement (2) und am Boden zu befestigen, **dadurch gekennzeichnet, dass** die oberen Befestigungsmittel (8) bei jeder Strebe umfassen:
- zwei ebene Befestigungslaschen (10), die einstückig mit dem quer verlaufenden metallenen Hauptelement (2) und parallel zu dessen Längsrichtung sind,
- eine Befestigungsschnittstelle (9), die Teil einer Strebe (5) ist und bildet:
- eine konkave Auflagefläche (9a), die direkt an einem Teil der Wand des quer verlaufenden metallenen Hauptelements (2) anliegt und an dessen Kontur angepasst ist,
- zwei ebene Auflageflächen (9b), die in Bezug auf das quer verlaufende metallene Hauptelement (2) beidseits der konkaven Auflagefläche (9a) gelegen sind, wobei jede ebene Auflagefläche (9b) mit einer Befestigungslasche (10) des quer verlaufenden metallenen Hauptelements (2) verbunden ist.

2. Querträger (1) nach Anspruch 1, **dadurch gekennzeichnet, dass** sich die ebenen Befestigungslaschen (10) in derselben Ebene erstrecken, beispielsweise einer im Wesentlichen horizontalen Ebene in einer Verwendungsposition des Querträgers, in der sich das quer verlaufende metallene Hauptelement (2) im Wesentlichen horizontal erstreckt.

3. Querträger (1) nach Anspruch 1 oder 2, **dadurch gekennzeichnet, dass** sich die ebenen Befestigungslaschen (10) in derselben Ebene erstrecken, die eine Längssymmetrieebene des quer verlaufenden metallenen Hauptelements (2) enthält.

4. Vorrichtung (1) nach einem der Ansprüche 1 bis 3, **dadurch gekennzeichnet, dass** das quer verlaufende metallene Hauptelement (2) einen runden Querschnitt aufweist.

5. Querträger (1) nach einem der Ansprüche 1 bis 4, **dadurch gekennzeichnet, dass** die Befestigungsschnittstelle (9) mindestens ein männliches/weibliches Passelement (15) umfasst, das mit einem entsprechenden Passelement (14) des quer verlaufenden metallenen Hauptelements (2) zusammenwirkt.

6. Querträger (1) nach Anspruch 5, **dadurch gekennzeichnet, dass** mindestens ein männliches/weibliches Passelement (15) auf einer ebenen Auflagefläche (9b) einer Befestigungsschnittstelle ausgebildet ist.

7. Querträger (1) nach einem der Ansprüche 1 bis 6, **dadurch gekennzeichnet, dass** die ebenen Auflageflächen (9b) einer Befestigungsschnittstelle (9) durch Schrauben oder Nieten (13) mit den Befestigungslaschen (10) des quer verlaufenden metallenen Hauptelements (2) verbunden sind.

8. Querträger (1) nach einem der Ansprüche 1 bis 7, **dadurch gekennzeichnet, dass** die Abstützung (3) Befestigungsbereiche (16, 17) umfasst, die dazu bestimmt sind, mindestens ein Funktionselement (18) befestigend aufzunehmen.

9. Querträger (1) nach einem der Ansprüche 1 bis 8, **dadurch gekennzeichnet, dass** die Abstützung (3) aus einem geformten Material besteht, das unter einem Polymer, Magnesium und ihrer Verbindung gewählt ist.

## Claims

1. Crossmember (1) of a driver's compartment of a vehicle, comprising a main transverse metal element (2) and a central strut (3) intended to be fastened to the floor of the vehicle, the strut (3) being a unitary component comprising two legs (5) substantially perpendicular to a longitudinal direction of the main transverse metal element (2) and at least one connecting bar (6, 7) between the two legs (5), upper and lower fastening means being provided at the top and bottom of the strut (3) for fastening it to the main metal element (2) and to the floor, respectively, **characterized in that** upper fastening means (8) comprise, for each leg:
- two planar fastening tabs (10) secured to the main transverse metal element (2) and parallel to a longitudinal direction thereof,
- a fastening interface (9) forming part of a leg (5) and defining:
- a concave bearing surface (9a) applied directly against a part of the wall of the main transverse metal element (2) and tightly following the contour thereof,
- two planar bearing surfaces (9b) situated on either side of the concave bearing surface (9a) with respect to the main transverse metal element (2), each planar bearing surface (9b) being secured to a fastening tab (10) of the main transverse metal element (2).

2. Crossmember (1) according to Claim 1, **characterized in that** said planar fastening tabs (10) extend in one and the same plane, for example a substantially horizontal plane in a use position of the crossmember in which the main transverse metal element (2) extends substantially horizontally.

3. Crossmember (1) according to Claim 1 or 2, **characterized in that** said planar fastening tabs (10) extend in one and the same plane containing a longitudinal axis of symmetry of the main transverse metal element (2).

4. Crossmember (1) according to any one of Claims 1 to 3, **characterized in that** the main transverse element metal (2) has a circular cross section.

5. Crossmember (1) according to any one of Claims 1 to 4, **characterized in that** the fastening interface (9) comprises at least one male/female indexing element (15) cooperating with a corresponding indexing element (14) of the main transverse metal element (2) .

6. Crossmember (1) according to Claim 5, **characterized in that** at least one male/female indexing element (15) is formed on a planar bearing surface (9b) of a fastening interface.

7. Crossmember (1) according to any one of Claims 1 to 6, **characterized in that** the planar bearing surfaces (9b) of a fastening interface (9) are secured to the fastening tabs (10) of the main transverse metal element (2) by screws or rivets (13).

8. Crossmember (1) according to any one of Claims 1 to 7, **characterized in that** the strut (3) comprises fastening regions (16, 17) intended to receive at least one functional element (18) by fastening.

9. Crossmember (1) according to any one of Claims 1 to 8, **characterized in that** the strut (3) is made of a moulded material chosen from a polymer, magnesium and a combination thereof.
